(19) **Europäisches Patentamt**

**European Patent Office**

**Office européen des brevets**

(11) **EP 1 591 156 A1**

(12) **EUROPEAN PATENT APPLICATION**

(43) Date of publication:
**02.11.2005 Bulletin 2005/44**

(51) Int Cl.7: **B01D 53/86**, B01J 23/89,
B01J 23/46, B01J 23/62

(21) Application number: **04010256.8**

(22) Date of filing: **30.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Itoh, Kenji**<br>  **Kyoto (JP)**<br>• **Eguchi, Koichi**<br>  **Kyoto-city Kyoto (JP)** |
| (71) Applicant: **Henkel KGaA**<br>**40589 Düsseldorf (DE)** | (74) Representative: **Gesthuysen, von Rohr & Eggert**<br>**Patentanwälte**<br>**Postfach 10 13 54**<br>**45013 Essen (DE)** |

(54) **Catalysts and method for elimination of aldehydes**

(57)     The present invention relates to a process for eliminating aldehydes by catalytic oxidation in the presence of at least one catalyst, wherein said catalyst is a three-component catalyst comprising a catalytic composition of the general formula:

$$Ru/ZrO_2 - MO_x$$

wherein M is selected from the group consisting of calcium (Ca), manganese (Mn), copper (Cu) and/or indium (In). In said formula, x comprises values in the range of from 0.2 to 3, especially from 0.5 to 2, the respective upper and lower limiting values being included.

The process of the present invention may be run at relatively moderate temperatures (e.g. ambient temperature) and since it renounces the use of the cost-intensive noble metal platinum as catalytic material, it is also economic. The process leads to a high conversion rate of said aldehydes, thus resulting in harmless degradation products, especially carbon dioxide and water.

Fig.

EP 1 591 156 A1

**Description**

The present invention refers to a catalytic system for the elimination of aldehydes and the respective application or use of such catalytic system.

Especially, the present invention relates to a process for eliminating aldehydes by catalytic oxidation, especially in the field of air-cleaning or air-purification, respectively (e.g. for technical purposes, such as in plants and laboratories, as well as in private households), as well as in the fields of chemical synthesis (e.g. in chemical processes) or chemical analysis.

Furthermore, the present invention relates to a catalytic system for the catalytic elimination and/or oxidation of aldehydes and its corresponding application or use, especially for the purposes defined before.

Aldehydes, especially short-chain, i.e. low-molecular aldehydes, such as acetaldehyde ($CH_3CHO$) and formaldehyde ($CH_2O$), are volatile and flammable substances and hence may easily be emitted as vapours into the environment. Aldehydes have been targeted as so-called air-toxics because they are highly reactive. These substances are harmful to human health. When brought in contact with a human being, these substances may cause irritation to the eyes, to the nose and to the respiratory tract, and some aldehydes, such as formaldehyde, are supposed to possess a certain carcinogenic potential.

Aldehydes are often used in the production of plastic materials, disinfecting agents and for tanning processes in the production of leather. Thus, they are often released to ambient air from building materials, furniture, leather materials, carpets, adhesives, paints and lacquers, wooden and plastic products etc. treated with or containing such aldehydes. In this manner, the aldehyde concentration may be accumulated in closed environments.

Furthermore, aldehydes, especially formaldehyde, are often used as disinfecting agents, especially in the medical or clinical field, e.g. in hospitals or in other medical or clinical facilities. Disinfection of areas of hospitals produce the highest levels of aldehydes, especially formaldehyde ("formalin"), which may reach concentrations of up to 20,000 $g/m^3$; such areas may not be occupied until formaldehyde concentrations have fallen to 1.2 $mg/m^3$ (1 ppm) and below. For reasons of comparison it may be remarked that formaldehyde levels in rooms where tobacco smoking takes place may exceed 100 $g/m^3$.

The contributions of various atmospheric environments to the average human daily intake of formaldehyde has been calculated to be 0.02 mg/day for outdoor air and <1 to 10 mg/day for buildings with sources of formaldehyde, respectively.

Due to increasing environmental and ecological awareness and stronger legal regulations, there is an increasing need for the decontamination of aldehydic pollutions, especially when aldehydes appear as pollutants in ambient air where the danger exists that these pollutants may lead to an intake by human beings exposed to such pollutants.

According to prior art, several methods have been suggested in order to eliminate aldehydes or at least decrease their concentration, especially in combustion or waste gases and in ambient air, respectively:

JP 10309444 A2 describes catalysts for oxidation of small amounts of aldehydes contained in waste gases from lean-burn engines or gas turbines, said catalysts comprising supported catalysts on the basis of platinum in amounts of 0.05 to 3.0 % per weight applied on an $Al_2O_3$ support. The oxidation of the aldehydes is performed at temperatures of between 250 °C and 650 °C. The decisive disadvantages of this process are to be seen in the fact that platinum is a rather expensive catalytic material which is required in relatively large amounts and that the process has to be performed at high temperatures in order to achieve high conversion rates, which leads to high energy costs.

In JP 2001239162 A2 a catalyst is described, which comprises platinum being applied on a zirconia-based catalyst support, said catalyst being used to remove aldehydes in an internal combustion exhaust gas. The zirconia-based catalyst support contains 20 to 30 % of tungsten oxide or molybdenum oxide, respectively. The conversion of formaldehyde and acetaldehyde of up to 90 % within a temperature range between 60 °C and 200 °C is to be achieved. However, the oxidation of certain aldehydes at ambient temperature is not mentioned at all in this invention. Furthermore, the production of the catalyst is rather uneconomic due to the obligatory use of platinum.

In JP 2002177782 A2 catalyst precursors and catalysts made thereof are used for oxidative decomposition of volatile organic compounds such as formaldehyde. The catalytic precursors consist of active species like manganese (Mn), copper (Cu), zinc (Zn), platinum (Pt) etc., which are applied on colloidal metals like $SiO_2$ and $Al_2O_3$ as support materials. However, formaldehyde is just oxidized to formic acid at ambient temperature over a catalyst prepared from the respective precursor. Thus, the process exhibits the disadvantage that at ambient temperature no complete oxidation of formaldehyde to relatively harmless and easily removable substances, such as carbon dioxide and/or water, occurs. In fact, formic acid represents a substance comprising an acidic activity, which is problematic in view of its chemical and biological compatibility.

Furthermore, in JP 2000044248 A2 manganates having molecular sieve structure and useful as oxidation catalysts are described. The preparation of these catalysts is performed by reaction of permanganates and aqueous solutions of divalent manganese salts in the presence of palladium (Pd) ions, rhodium (Rh) ions, platinum (Pt) ions, ruthenium (Ru) ions and/or gold (Au) ions. The resulting catalyst may be used for the oxidation of formaldehyde and acetaldehyde. However, the catalyst described in this document has the serious disadvantage that its activity declines within a few hours to half the level. Thus, a long-term, cost-effective and user-friendly use of this catalyst is not possible. Further, expensive catalytic materials, such as platinum, palladium and gold, are required.

US-A-5 585 083 discloses a process for oxidizing formaldehyde to carbon dioxide and water, wherein a mixture of formaldehyde and an oxidizing agent is exposed to a catalyst which includes a noble metal (e.g. platinum (Pt), palladium (Pd), gold (Au), silver (Ag) and rhodium (Rh)) dispersed on a metal oxide which possesses more than one oxidation state. In this context, oxides of a transition metal (e.g. oxides of iron (Fe), manganese (Mn), copper (Cu), cobalt (Co) or nickel (Ni)) are used as promoters with respect to the oxidation process. However, in order to achieve an effective oxidation of formaldehyde at ambient temperature large amounts of platinum (12 % per weight) are used resulting in an high amount of costs with respect to the preparation of these catalysts.

Finally, JP 52030283 A2 describes a palladium/carbon-catalyst for formaldehyde removal from air, wherein the catalyst comprises palladium (Pd) in amounts of 0.1 to 10 % per weight. However, the preparation of the catalyst requires multiple and time-consuming steps, such as activation of the support, impregnation and drying of the catalytic system and reduction of palladium (Pd). Thus, this process exhibits only a limited applicability due to the large number of preparation steps with respect to the catalyst.

Therefore, an object of the present invention is to provide an efficient process for eliminating aldehydes, which at least partially avoids the disadvantages related to the prior art processes.

It is a further object of the present invention to provide a process for eliminating aldehydes, which allows their efficient degradation, especially oxidation, to harmless substances, preferably carbon oxide(s) and water.

Furthermore, it is another object of the present invention to provide a catalytic system which may be used for catalytic elimination, especially oxidation, of aldehydes, especially for the aforementioned purpose.

Applicant has now surprisingly found that the problems related to the prior art methods may be overcome by using a ternary catalytic system on the basis of a composition comprising oxides of ruthenium, zirconium and a further metal for eliminating aldehydes by catalytic oxidation.

Thus, according to a **first aspect** of the present invention, the present invention relates to a process for eliminating aldehydes by catalytic oxidation in the presence of at least one catalytic system, wherein the catalytic system is a three-component catalytic system comprising a catalytic composition of the general formula:

$$Ru/ZrO_2 - MO_x$$

In the above formula, M is selected from the group consisting of calcium (Ca), manganese (Mn), copper (Cu) and/or indium (In) or mixtures thereof.

In the above formula, x comprises values in the range of from 0.2 to 3, especially from 0.5 to 2, the respective upper and lower limiting values being included.

In other words, $MO_x$ in the above formula denotes at least one metal oxide, wherein said metal of said metal oxide is selected from the group consisting of calcium (Ca), manganese (Mn), copper (Cu) and/or indium (In) or mixtures thereof.

The term "three-component catalytic system" or "ternary catalytic system" refers to the fact that three different metals are present within the catalytic system used according to the present invention, namely Ru, Zr and M as defined above.

The $Ru/ZrO_2$-component is preferably a mixed oxide of ruthenium and zirconium. The third metal component M in the above formula is also part or component of a metal oxide (namely: $MO_x$), wherein said third metal component M may be either a component of said mixed $Ru/ZrO_2$-oxide to form a ternary mixed oxide (i.e. a ternary mixed oxide of Ru, Zr and M as defined above) and/or wherein said third metal component M may alternatively form a separate oxide which may preferably form an intimate and homogenous (ad)mixture with the mixed oxide of $Ru/ZrO_2$. Principally, it is also possible that both of these alternatives are present within the same catalytic system.

It has to be noted that $MO_x$ in the above formula does not necessarily correspond to the chemical structure or to the crystal system or lattice, but rather corresponds to the mere stoichiometry of this component.

According to the present invention, the lower limits of the weight ratio of ruthenium (Ru) to $ZrO_2$ in the above formula may be 0.005 (w/w), especially 0.01 (w/w). The upper limit with respect to the weight ratio of ruthenium (Ru) to $ZrO_2$ may be 0.05 (w/w), especially 0.04 (w/w), preferably 0.03 (w/w). For, applicant has found that optimum results with respect to the catalytic activity of the catalytic system of the present invention are obtained if the weight ratio of ruthenium (Ru) to $ZrO_2$ is at least 0.01. The aforementioned upper limits are chosen for economic reasons, i.e. it is also possible to choose higher weight ratios if appropriate or necessary due to specific requirements.

According to the present invention, the weight ratio of ruthenium (Ru) to $ZrO_2$ may preferably be in the range of from 0.005 (w/w) to 0.05 (w/w), especially from 0.01 (w/w) to 0.04 (w/w), preferably from 0.01 (w/w) to 0.03 (w/w).

With respect to the aforementioned values, the respective upper and lower limiting values are included.

The molar ratio of $MO_x$ to $ZrO_2$ in the above formula may be at least 0.05 (mol/mol) and the respective upper limit of the molar ratio of $MO_x$ to $ZrO_2$ may be 0.3 (mol/mol), especially 0.2 (mol/mol). Thus, according to the present invention, the molar ratio of $MO_x$ to $ZrO_2$ may be in the range of from 0.05 (mol/mol) to 0.3 (mol/mol), especially from 0.05 (mol/mol) to 0.2 (mol/mol), the respective upper and lower limiting values being included.

According to a preferred embodiment of the present invention, the component M as mentioned in the aforementioned formula may be selected from calcium (Ca), manganese (Mn) and/or indium (In). According to a preferred embodiment of the present invention, M represents indium (In).

Especially, $MO_x$ as mentioned in the aforementioned formula may comprise metal ions selected from the group consisting of Ca(II), Mn(III), Mn(IV), Cu(I), Cu(II) and/or In(III), the Roman numerals denoting the respective oxidation state of the named metal ions.

For example, $MO_x$ as mentioned in the aforementioned formula may comprise or correspond to metal oxides selected from the group consisting of $CaO$, $Mn_2O_3$, $MnO_2$, $Cu_2O$, $CuO$ and/or $In_2O_3$. However, it is also possible to use non-stoichiometric oxides of the named metals or mixtures of stoichiometric and non-stoichiometric oxides.

According to the present invention, a large number of aldehydes may serve as target molecules to be decomposed using the catalytic system of the present invention. However, especially short-chain, i.e. low-molecular aldehydes are preferred compounds to be eliminated. Respective examples for said aldehydes are formaldehyde and acetaldehyde. Preferably, the aldehydes to be eliminated in the process of the present invention are gaseous, e.g. they are gaseous components in the ambient air (i.e. gaseous pollutants in the ambient air). However, if appropriate, it is also possible to eliminate aldehydes from organic or aqueous solutions or even as pure substances.

The process of the present invention may be used for the elimination and/or decomposition and/or decontamination of aldehydes, especially when they appear as pollutants in ambient air where the danger exists that these pollutants may lead to an influence of the health of human beings who may be exposed to these pollutants. Thus, the process of the present invention may be used in the field of air-cleaning and/or air-purification, respectively (e.g. in industrial plants and laboratories as well as in private households). In this context, the process of the present invention may be used to eliminate aldehydes especially for improving the air-quality with respect to these pollutants and thus diminishing the risk of critical health effects being provoked by said aldehydic pollutants. Thus, the process of the present invention may be used in order to clean and to decontaminate, respectively, ambient air.

An example for the application of the process of the present invention is the reduction of aldehydic pollution in private households, especially when materials contaminated with aldehydes are present, such as building materials, furniture, leather materials, carpets, adhesives, paints and lacquers from which the respective aldehydes may evaporate into the ambient air.

Furthermore, the process of the present invention may also be used within the scope of industrial production of aldehyde-containing compositions, like disinfecting agents or adhesives, especially when a certain part of the used aldehydes evaporate during the production process and consequently pollute the ambient air of such industrial plants. In this case, the process of the present invention may be used to significantly decrease the charging of the ambient air with said aldehydic pollutants and thus improve the working conditions with respect to minimized noxious effects.

Furthermore, the process of the present invention may be applied with respect to chemical processes, especially within the scope of an industrial level, e.g. when aldehydes occur as undesired by-products to be removed from chemical processing steps without any delivery to the ambient air.

The process of the present invention exhibits the decisive advantages that it provides an effective and cost-reducing method, especially due to the low concentration of a noble metal within the catalytic systems of the present invention. In this context, the reduction of preparation costs is also attributed to the fact that ruthenium (Ru) used as a catalytic component in the present invention is less expensive than platinum (Pt) and palladium (Pd), the latter being commonly used in prior art. Furthermore, costs are reduced since the catalytic system of the present invention may be prepared by a simple preparation procedure with a small number of processing steps as subsequently discussed.

Furthermore, the present invention exhibits the advantage that the catalytic system of the present invention exhibits long-term activity since a declination of the activity with respect to the combustion or oxidation (i.e. conversion) of aldehydes cannot be observed over a long period of time.

The process of the present invention may lead to a complete oxidation of the respective aldehydes to be eliminated, for example from ambient air, beyond the state of carboxylic acid due to the high activity of the catalytic system of the present invention.

The process of the present invention is performed in the presence of at least one oxidizing agent. Within the scope of the present invention, all appropriate oxidizing agents known per se may be used for the purpose of oxidizing the aldehydes to be eliminated. The preferred oxidizing agent is oxygen, especially in the form of air. As a function of the amount of the oxidizing agent, a complete oxidation beyond the state of carboxylic acids to carbon oxide(s) and water is obtained in general. Examples for carbon oxides, which are generated within the scope of the oxidation of said aldehydes, are carbon monoxide and/or carbon dioxide (depending on the concentration of oxygen). It is preferred to oxidize the aldehydes to carbon dioxide and water because the latter substances are harmless and are in general not harmful to human health.

Furthermore, the oxidation level of the aldehydes depends on the reaction conditions, especially on the ratio of aldehydes/catalytic system/oxidizing agent.

In order to enhance or accelerate the oxidation of the aldehydes, it is preferred to perform the oxidizing process in the presence of an excess, preferably a large excess of the oxidizing agent, such as oxygen, especially in the form of air. Thus, a decisive advantage of the present invention may be seen in the fact that it provides a complete oxidation of aldehydes beyond the state of carboxylic acids due to the high activity of the catalytic system on the one hand and the optimised conditions of the oxidation process (ratio of aldehydes/catalytic system/oxidizing agent, especially oxidation in the presence of an excess of the oxidizing agent) on the other hand.

According to the present invention, the aldehydes to be oxidized or to be eliminated, respectively, are especially in the form of a gaseous or liquid medium. For example, the aldehydes to be eliminated may exist in the form of a vapour phase in air or in the form of an aerosol. It is also possible that the aldehydes are provided in the form of a liquid medium containing or consisting of said aldehydes. According to a specific embodiment of the process of the present invention, the aldehydes to be eliminated are brought in contact with the catalytic system of the present invention, especially in the form of an air-stream containing said aldehydes, in the presence of at least one oxidizing agent. If appropriate or required according to application necessities, further amounts of the oxidizing agent may be added to the air-stream. Advantageously, the flow-rate is adapted such that an at least essentially complete conversion of the aldehydes is reached, preferably to carbon oxide(s) (preferably carbon dioxide) and water.

According to the present invention, the process of eliminating (i.e. oxidizing) the aldehydes is run at temperatures of less than or equal to 130 °C, especially less than or equal to 100 °C. In a preferred embodiment of the present invention, the process is run at ambient temperature.

The term "ambient temperature" generally refers to process temperatures in the range of from about 20 °C to about 30 °C. However, it is possible to run the process of the present invention at even lower temperatures if appropriate or necessary due to specific requirements.

With respect to the oxidation of acetaldehyde, the process of the present invention may be run at ambient temperature or at even lower temperatures, whereas in the case of formaldehyde the process of the present invention should be carried out at temperatures in the range of from about 80 °C to 130 °C, especially at about or below 100 °C. In general, the process temperature depends, inter alia, on the type of aldehyde to be eliminated and should preferably be chosen in a manner such that a complete or at least essentially complete (i.e. conversion rate $\geq$ 90 %) oxidation of the aldehyde to the preferred final products carbon dioxide and water is ensured.

Principally, the operation mode of the process of the present invention may be a continuous or a discontinuous operation mode. A continuous operation mode is preferred since it provides a higher elimination rate of aldehydes per time unit and exhibits a better economic performance. However, it is also possible to perform a discontinuous operation mode if appropriate or necessary due to specific requirements.

Principally, the catalytic system of the present invention may be prepared as an unsupported catalyst (i.e. a catalyst in mass or a catalyst without support) or alternatively as a supported catalyst.

The use of a supported catalyst is preferred, especially with respect to the reduction of used amounts of catalytic material, resulting in an improved economy due to decreased production costs. Furthermore, a supported catalyst may exhibit a significantly enlarged active surface, thus providing an enhanced catalytic activity. For, depending on the specific use or application of the catalytic system of the present invention, a certain forming or shaping of the support or catalyst, respectively, may be performed, especially in order to achieve the aforementioned increase of the active surface and the diminishing of the used amounts of catalytic material, respectively. In this context, the support and/or catalyst, respectively, may be brought into a shape which is appropriate for the respective application; such a shaping or forming process may be performed in a manner known per se by the skilled practitioner. As a support material, common materials known by the skilled practitioner may be used, such as carbon, aluminum oxide ($Al_2O_3$) etc. (cf. Römpp Chemielexikon, Vol. 6, 1999, Georg Thieme Verlag, page 4599, Keyword "Träger" [support] as well as the references cited therein, the full contents of which are incorporated by reference hereby). In this context, the support used for the catalytic system of the present invention should be at least essentially inert, i.e. it should not influence the catalytic properties of the catalytic system of the present invention and should also not interact or react with the aldehydes to be eliminated.

The preparation of the catalytic system of the present invention may be carried out in a manner known per se by a skilled practitioner. For this purpose, the preparation of the catalytic system may be performed using a chemical precipitation step followed by a drying and finally a sintering and/or calcination step.

According to a preferred embodiment of the present invention, the preparation of the catalyst may be carried out by using water-soluble compounds or salts of the respective components of the catalytic system, wherein said compounds or salts may then be precipitated from the aqueous solution, afterwards dried and finally sintered and/or calcined. As a non-limiting example, aqueous solutions of $Ru(NO_3)_3$ and $In(NO_3)_3$ may be mixed and the resulting mixture may be diluted; then, ZrO$_2$-powder may be added to the diluted solution in order to load the catalyst with ruthenium (Ru) and InO$_x$. The mixture may be stirred and dried to obtain a catalytic precursor. The obtained precursor may then be dried and finally calcined (e.g. in air) to obtain the catalytic system of the present invention. The catalytic system may be prepared e.g. by pressing the catalytic material into a certain shape, for example into a pellet which may be shifted into small pieces or, as mentioned above, by coating or applying, respectively, the catalytic material on an appropriate support using a method known per se by the skilled practitioner (e.g. spray-drying etc.).

In a preferred embodiment of the present invention, the catalytic system may be subjected to an activation pre-treatment prior to its use in the inventive process.

For, applicant has surprisingly found that such an activation pre-treatment significantly increases the performance of the catalytic system and also contributes to the improvement of the durability of the catalytic system on the one hand and that of the elimination or conversion rate, respectively, on the other hand.

According to the present invention, the activation pre-treatment may be performed immediately prior to the use of the catalytic system in the inventive process. The activation pre-treatment may be performed by heating the catalytic system, especially at temperatures of at least 300 °C, preferably at least 350 °C, more preferably at least 400 °C, and then maintaining the catalytic system at these temperatures for a certain duration. The activation pre-treatment may be performed for a duration of at least 30 minutes, especially at least 45 minutes, preferably at least 60 minutes. Activation pre-treatment may be performed in the presence of an oxidizing atmosphere containing at least one oxidizing agent (preferably oxygen, especially in the form of air). The steps of activation pre-treatment may be repeated several times if appropriate or necessary due to specific requirements.

The performance of the catalytic system of the present invention, especially with respect to its durability and activity, may be increased by pre-treatment as subsequently described:

The pre-treatment may be performed by heating the catalytic system at temperatures of preferably about 400 °C for a duration of preferably about 1 hour, thereby providing an air-stream to the catalytic system with space velocity of preferably about 30,000 litres / (kg • h). Preferably, the air-stream should contain at least one oxidizing agent. After the temperature treatment, the catalytic system is cooled to ambient temperature, thereby preferably providing an air-stream with space velocity of preferably about 30,000 litres / (kg • h).

Without being bound to a specific theory, it is believed that said pre-treatment especially compensates and/or diminishes defect structures on the surface and/or within the catalytic system, thereby increasing the performance of the catalytic system.

The term "defect structure" used herein is to be understood in a broad manner, i.e. this term refers to a variety of defects especially of the catalytic system, e.g. defects and/or disorders in the atomic structure and/or the crystal or ion lattice of the catalytic system. Another example for such defect structures are chemical compounds especially originating from non-complete oxidizing processes of the aldehydes to be eliminated, which remain on the active surface of the catalytic system, thereby decreasing its activity.

Preferably, said pre-treatment step may be performed subsequent to the preparation of the catalytic system. In a preferred embodiment of the present invention, the pre-treatment is performed prior to the respective combustion/conversion step in which the aldehydes are eliminated, especially immediately before its use.

For further information with respect to the activation procedure, reference can be made to the subsequent Examples of the present invention.

In this context, another decisive advantage of the present invention is that the catalytic system of the present invention exhibits a long-term durability reducing operating costs and providing an easy and user-friendly applicability with respect to its practical use since the process of the present invention renounces or at least diminishes, respectively, complex and time-consuming changes of exhausted catalytic material.

According to a **second aspect** of the present invention, the present invention refers to the inventive use of the catalytic system as defined above. The catalytic system as defined above may be used for a plurality of applications. As mentioned above, such catalytic system may be especially used in air-cleaning and/or air-filtering systems in order to eliminate aldehydic pollutants. Furthermore, the catalytic system of the present invention may also be used for synthetic purposes within the scope of chemical production processes in order to eliminate aldehydes occurring as undesired by-products in such chemical processes. For further details with respect to the use of the catalytic system of the present invention, reference can be made to the above explanations with respect to the process of the present invention, which also apply to the use of the catalytic system of the present invention accordingly.

According to a **third aspect** of the present invention, a catalytic system, especially for the catalytic elimination and/or oxidation of aldehydes, is provided, said catalytic system comprising at least one catalyst, wherein said catalyst is a three component catalyst comprising a catalytic composition of the general formula

$$Ru/ZrO_2 - MO_x$$

as defined above.

For further details with respect to the catalytic system of the present invention and its preparation, reference can be made to the above explanations with respect to the process of the present invention, which also apply to the catalytic system of the present invention accordingly.

As delineated before, the inventive process, the inventive use and the inventive catalytic system lead to a great a number of advantages:

The process of the present invention provides an efficient and cost-effective method for the elimination of aldehydes, especially due to the low concentration of a noble metal within the catalytic system of the present invention.

Furthermore, production costs are reduced since the catalytic system of the present invention may be prepared by a simple preparation procedure comprising a small number of processing steps.

The catalytic system of the present invention exhibits a long-term activity since a declination of the activity with respect to the combustion (i.e. conversion) of aldehydes to be eliminated does not occur over a long period of time.

A decisive advantage of the present invention may also be seen in the fact that it provides a complete oxidation of aldehydes beyond the state of carboxylic acids due to the high activity of the catalytic system. Thus, a conversion to harmless oxidation products is provided, which may be released into the environment, especially ambient air, without being dangerous to human health.

Another advantage of the present invention is that the catalytic system of the present invention exhibits a long-term durability reducing operating costs and providing an easy and user-friendly applicability.

Thus, the subject-matter of the present invention provides an effective elimination of harmful aldehydes, especially where they exist as undesired pollutants, thereby improving environmental conditions and quality of life.

Further embodiments, aspects, variations and advantages of the present invention will be understood by the skilled practitioner when reading the description, without him leaving the scope of the present invention.

The present invention will be illustrated by the following examples which, however, do not limit the present invention.

**Examples:**

**Example 1: Preparation of Ru/ZrO$_2$ - MO$_x$ (M = Ca, Mn, Cu, and In):**

As a typical example, preparation of Ru/ZrO$_2$ - InO$_x$ is described as follows. Metal oxide powder, ZrO$_2$ (RC-100, distributed by Diichi Kigensokagaku) was dried overnight at 120 °C prior to its use. An aqueous solution of Ru (NO$_3$)$_3$ (2.84 g, distributed by Tanaka, Kikinzoku (Ru: 3.876 % per weight)) and In(NO$_3$)$_3$ · 3 H$_2$O (1.44 g) were mixed and the mixture was diluted to 25 ml. The powder of ZrO$_2$ (5.00 g) was added to the diluted solution to load the catalyst with Ru (Ru/ZrO$_2$ = 0.02 (w/w)) and InO$_x$ (InO$_x$/ZrO$_2$ = 0.1 (mol/mol)). The mixture was stirred and dried on a stream bath at 80 °C to be a dark purple precursor. After drying the precursor overnight at 120 °C, the precursor was calcined at 500 °C for 3 h in the air (heating rate: 200 °C/h). The obtained catalytic system was pressed for 10 min (300 kg/cm$^2$) into a pellet and shifted into about 1 to about 2 mm pieces.

**Example 2: Combustion (conversion) of acetaldehyde over Ru/ZrO$_2$ -MO$_x$ (M = Ca, Mn, Cu, and In):**

The activity of the catalysts for combustion (conversion) of acetaldehyde was examined in a conventional flow reactor operating at atmospheric pressure. The catalyst (0.10 g) was fixed in a quartz reactor by packing quartz wool at both ends of the catalyst bed. Before the combustion experiment, the catalyst was pretreated for 60 min in an air-stream at 50 ml/min at 400 °C and cooled to ambient temperature in the air-stream. A gas-containing acetaldehyde was fed by a mass-flow controller to the catalyst bed at a flow rate of 50 ml/min. The concentration of acetaldehyde in the fed gas was adjusted to be 3.2 % in the air by dilution. Under the conditions, space velocity is 30,000 litres / (kg • h). The effluent gas was analysed using an on-line gas chromatograph equipped with an active carbon column for separation of CO$_2$ and chromosorb W for separation of acetaldehyde. The catalytic activity was estimated by conversion of acetaldehyde calculated based on the concentration of acetaldehyde according to the following equation:

$$\% \text{ conversion} = \frac{C_{out}}{C_{in}} \times 100$$

wherein $c_{in}$ and $c_{out}$ represent the concentration of acetaldehyde in the fed gas and the effluent gas, respectively.

Once the gas was fed to the reactor, combustion (conversion) of acetaldehyde occurred at ambient temperature over Ru/ZrO$_2$ - MO$_x$ (M = Ca, Mn, Cu, and In). As a typical result, the combustion over Ru/ZrO$_2$ - InO$_x$ is described as follows: Over Ru/ZrO$_2$ - InO$_x$ (Ru/ZrO$_2$ = 0.02 (w/w); InO$_x$/ZrO$_2$ = 0.1 (mol/mol)), acetaldehyde was ignited at ambient temperature and was oxidized up to 96 % level of conversion without heating by a furnace. No declination of the activity of the catalyst was observed within the period examined (see also Example 4).

In order to determine the composition of $Ru/ZrO_2\text{-}InO_x$, the catalytic systems were prepared, $Ru/ZrO_2$ - $InO_x$ by changing the ratio of Ru and $InO_x$, combustion (conversion) of acetaldehyde over the catalyst was carried out.

The results are summarized in Table 1. The symbol "$T_{90}$" represents the temperature at which the conversion level of acetaldehyde is 90 %. The value of $T_{90}$ rose by decreasing the value of $Ru/ZrO_2$. For elimination of acetaldehyde without addition of energy, the value of $Ru/ZrO_2$ should be at least more than 0.01 and the value of $InO_x/ZrO_2$ should be in the range between 0.05 and 0.2.

Table 1:

| Catalytic activity of $Ru/ZrO_2$ - $InO_x$ for combustion (conversion) of acetaldehyde | | |
|---|---|---|
| $Ru/ZrO_2$ (w/w) | $InO_x/ZrO_2$ (mol/mol) | Activity ($T_{90}$ / °C) |
| 0.001 | 0.1 | 296 |
| 0.005 | 0.1 | 239 |
| 0.01 | 0.1 | a.t. |
| 0.02 | 0.1 | a.t. |
| 0.05 | 0.1 | a.t. |
| 0.02 | 0 | 168 |
| 0.02 | 0.05 | a.t. |
| 0.02 | 0.2 | a.t. |
| 0.02 | 0.3 | 247 |
| a.t.: ambient temperature | | |

**Example 3: Combustion of formaldehyde over $Ru/ZrO_2$- $MO_x$(M = Ca, Mn, Cu, and In):**

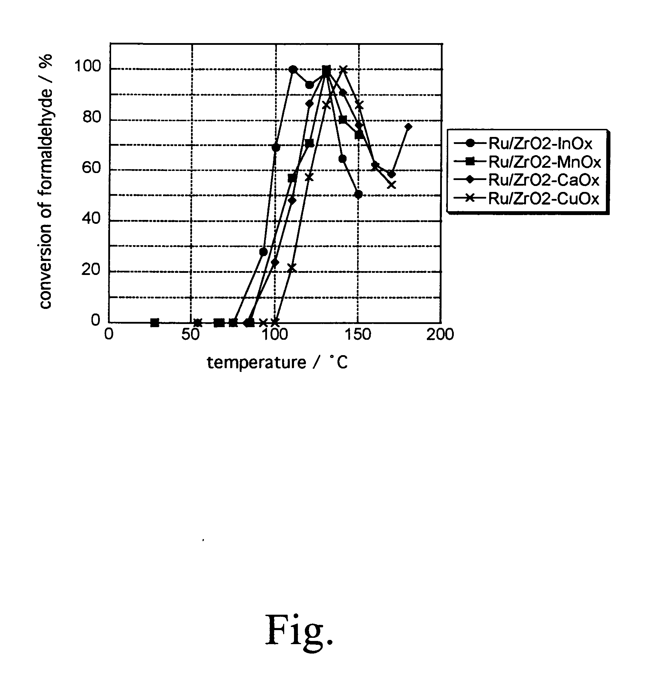

The activity of the catalytic system for combustion (conversion) of formaldehyde was examined as above. A gas ratio $N_2$:$O_2$ (4:1) containing 172 ppm formaldehyde was fed by a mass-flow controller to the catalyst bed at a flow rate of 50 ml/min. The catalytic activity was calculated by the conversion of formaldehyde and the results are depicted in the only Figure. The only Figure shows the catalytic combustion of formaldehyde (138 ppm) over $Ru/ZrO_2$ - $MO_x$ (M = Ca, Mn, Cu, and In; reaction conditions: gas flow speed 50 ml/min, space velocity 30,000 litres / (kg • h)). The catalytic systems started to work below 100 °C and the conversion of formaldehyde reached to 90 % level around 110 °C, as shown in the only Figure. The drop in the conversion of formaldehyde was observed in the temperature range higher than 130 °C. However, it was found that the catalytic activity of $Ru/ZrO_2$ - $InO_x$ was maintained at 110 °C within the period examined.

**Example 4: Durability test of $Ru/ZrO_2$-$MO_x$ (M = Ca, Mn, Cu, and In):**

The durability of $Ru/ZrO_2$ - $InO_x$, as a typical example, for combustion (conversion) of acetaldehyde and formaldehyde was examined in terms of two procedures shown in Procedure 1 and 2. In the durability test according to Procedure 1, it was found that acetaldehyde ignited over the catalyst at ambient temperature and conversion level of acetaldehyde was kept to 95 % after 50 days. Moreover, in the durability test according to Procedure 2, the activity of $Ru/ZrO_2$ - $InO_x$ for both acetaldehyde and formaldehyde combustion (conversion) was maintained after storing at 120 °C for one week. Thus, the catalysts have sufficient durability for practical use.

**Procedure 1 (durability test):**

- pre-treatment; air (gas flow speed) 50 ml/min, 400 °C, 1h; then
- cooling to ambient temperature; air 50 ml/min; then
- combustion (conversion), 1h; then
- drying, air 50 ml/min, 400 °C, 1h; then
- cooling to ambient temperature, air 50 ml/min; then

- storing for 23 days at ambient temperature; then
- pre-treatment, air 50 ml/min, 400 °C, 1h; then
- cooling to ambient temperature, air 50 ml/min; then
- combustion (conversion), 1h; then
- drying, air 50 ml/min, 400 °C, 1h; then
- cooling to ambient temperature, air 50 ml/min; then
- storing for 27 days at ambient temperature; then
- pre-treatment, air 50 ml/min, 400 °C, 1h; then
- cooling to ambient temperature, air 50 ml/min; then
- combustion (conversion), 1h; then
- drying, air 50 ml/min, 400 °C, 1h; and finally
- cooling to ambient temperature, air 50 ml/min.

**Procedure 2:**

- pre-treatment, air 50 ml/min, 400 °C, 1h; then
- cooling to ambient temperature, air 50 ml/min; then
- combustion (conversion), 1h; then
- storing in a oven, 120 °C, for a week; and finally
- combustion (conversion), 120 °C.

**Claims**

1.  A process for eliminating aldehydes by catalytic oxidation in the presence of a catalytic system, **characterized in that** said catalytic system comprises a three-component catalyst comprising a catalytic composition of the general formula:

$$R_u/ZrO_2 - MO_x$$

wherein M is selected from the group consisting of calcium (Ca), manganese (Mn), copper (Cu) and/or indium (In) and wherein x comprises values in the range of from 0.2 to 3, especially from 0.5 to 2, the respective upper and lower limiting values being included.

2.  The process according to Claim 1, **characterized in that** said aldehydes, especially in a form of a gaseous or liquid medium containing said aldehydes, are brought in contact with said catalyst, especially in the presence of at least one oxidizing agent, preferably oxygen, thereby oxidizing said aldehydes preferably to carbon oxide(s) and water.

3.  The process according to Claim 1 or 2, **characterized in that** the process is run at temperatures of less than or equal to 130 °C, especially less than or equal to 100 °C, preferably at ambient temperature.

4.  The process according to any of Claims 1 to 3, **characterized in that** said catalytic system is subjected to an activation pre-treatment prior to its use in the process, especially wherein said activation pre-treatment is performed by heating said catalytic system, especially at temperatures of at least 300 °C, preferably at least 350 °C, more preferably at least 400 °C, and/or especially wherein said activation pre-treatment is performed for a duration of at least 30 minutes, especially at least 45 minutes, preferably at least 60 minutes, preferably in the presence of an oxidizing atmosphere.

5.  The process according to any of Claims 1 to 4, **characterized in that** the weight ratio of Ru to $ZrO_2$ is in the range of from 0.005 (w/w) to 0.05 (w/w), especially from 0.01 (w/w) to 0.04 (w/w), preferably from 0.01 (w/w) to 0.03 (w/w), the respective upper and lower limiting values being included, and/or that the molar ratio of $MO_x$ to $ZrO_2$ is in the range of from 0.05 (mol/mol) to 0.3 (mol/mol), especially from 0.05 (mol/mol) to 0.2 (mol/mol), the respective upper and lower limiting values being included.

6. The process according to any of Claims 1 to 5, **characterized in that** M is selected from the group consisting of calcium (Ca), manganese (Mn) and/or indium (In) and is preferably indium (In) and/or that $MO_x$ comprises metal ions selected from the group consisting of Ca(II), Mn(III), Mn(IV), Cu(I), Cu(II) and/or In(III) wherein the Roman numerals denote the respective oxidation state of the named metal ions and/or that $MO_x$ comprises or corresponds to metal oxides selected from the group consisting of CaO, $Mn_2O_3$, $MnO_2$, $Cu_2O$, CuO and/or $In_2O_3$.

7. A catalytic system, especially for the catalytic elimination and/or oxidation of aldehydes, said catalytic system comprising at least one catalyst,
   **characterized in**
   **that** said catalyst is a three-component catalyst comprising a catalytic composition of the general formula:

$$Ru/ZrO_2 - MO_x$$

   wherein M is selected from the group consisting of calcium (Ca), manganese (Mn), copper (Cu) and/or indium (In) and x comprises values in the range of from 0.2 to 3, especially from 0.5 to 2, the respective upper and lower limiting values being included and/or
   wherein $MO_x$ denotes at least one metal oxide, wherein said metal of said metal oxide is selected from the group consisting of calcium (Ca), manganese (Mn), copper (Cu) and/or indium (In) or mixtures thereof.

8. The catalytic system according to Claim 7, **characterized in that** the weight ratio of Ru to $ZrO_2$ is in the range of from 0.005 (w/w) to 0.05 (w/w), especially from 0.01 (w/w) to 0.04 (w/w), preferably from 0.01 (w/w) to 0.03 (w/w), the respective upper and lower limiting values being included, and/or that the molar ratio of $MO_x$ to $ZrO_2$ is in the range of from 0.05 (mol/mol) to 0.3 (mol/mol), especially from 0.05 (mol/mol) to 0.2 (mol/mol), the respective upper and lower limiting values being included.

9. The catalytic system according to Claim 7 or 9, **characterized in that** M is selected from the group consisting of calcium (Ca), manganese (Mn) and/or indium (In) and is preferably indium (In) and/or that $MO_x$ comprises metal ions selected from the group consisting of Ca(II), Mn(III), Mn(IV), Cu(I), Cu(II) and/or In(III) wherein the Roman numerals denote the respective oxidation state of the named metal ions and/or that $MO_x$ comprises or corresponds to metal oxides selected from the group consisting of CaO, $Mn_2O_3$, $MnO_2$, $Cu_2O$, CuO and/or $In_2O_3$.

10. The use of a catalytic system as defined in any of Claims 7 to 9 for the elimination of aldehydes, especially in air-cleaning and/or air-filtering systems.

Fig.

## EUROPEAN SEARCH REPORT

**European Patent Office**

Application Number

EP 04 01 0256

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 406 896 A (IDEMITSU KOSAN CO ; PETROLEUM ENERGY CENTER FOUND (JP)) 9 January 1991 (1991-01-09) * example 7; table 1 * ----- | 7-9 | B01D53/86 B01J23/89 B01J23/46 B01J23/62 |
| X | EP 0 729 785 A (BASF AG) 4 September 1996 (1996-09-04) * claims 1,5,6; examples 6,7 * ----- | 7-9 | |
| X | DATABASE WPI Section Ch, Derwent Publications Ltd., London, GB; Class E36, AN 1993-356564 XP002303319 & JP 05 261286 A (NISSAN GADORA SHOKUBAI KK) 12 October 1993 (1993-10-12) * abstract * ----- | 7 | |
| X | DE 24 26 597 A (PROD POUR CATALYSE RUEIL MALMA) 2 January 1975 (1975-01-02) * claims 1,3; tables 1-3 * ----- | 7-9 | |
| X | EP 0 548 679 A (IDEMITSU KOSAN CO) 30 June 1993 (1993-06-30) * example 3; table * ----- | 7-9 | **TECHNICAL FIELDS SEARCHED (Int.Cl.7)** B01D B01J |
| A | US 3 992 468 A (LE PAGE JEAN-FRANCOIS ET AL) 16 November 1976 (1976-11-16) * example 3 * ----- | | |
| A | US 5 009 872 A (CHUANG KARL T  ET AL) 23 April 1991 (1991-04-23) * the whole document * ----- | | |

The present search report has been drawn up for all claims

| Place of search | Date of completion of the search | Examiner |
|---|---|---|
| Berlin | 1 November 2004 | Gruber, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 591 156 A1**

**ANNEX TO THE EUROPEAN SEARCH REPORT
ON EUROPEAN PATENT APPLICATION NO.**          EP 04 01 0256

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2004

| Patent document cited in search report | | Publication date | Patent family member(s) | | Publication date |
|---|---|---|---|---|---|
| EP 0406896 | A | 09-01-1991 | JP | 3202151 A | 03-09-1991 |
| | | | JP | 8022378 B | 06-03-1996 |
| | | | JP | 1914361 C | 23-03-1995 |
| | | | JP | 3109942 A | 09-05-1991 |
| | | | JP | 6040963 B | 01-06-1994 |
| | | | DE | 69004628 D1 | 23-12-1993 |
| | | | DE | 69004628 T2 | 09-06-1994 |
| | | | EP | 0406896 A1 | 09-01-1991 |
| | | | US | 5134109 A | 28-07-1992 |
| EP 0729785 | A | 04-09-1996 | DE | 19507007 A1 | 29-08-1996 |
| | | | CN | 1138499 A | 25-12-1996 |
| | | | EP | 0729785 A1 | 04-09-1996 |
| | | | JP | 8243392 A | 24-09-1996 |
| JP 5261286 | A | 12-10-1993 | JP | 3260411 B2 | 25-02-2002 |
| DE 2426597 | A | 02-01-1975 | FR | 2231425 A1 | 27-12-1974 |
| | | | FR | 2232359 A1 | 03-01-1975 |
| | | | FR | 2234039 A1 | 17-01-1975 |
| | | | FR | 2234923 A1 | 24-01-1975 |
| | | | FR | 2234922 A1 | 24-01-1975 |
| | | | FR | 2234924 A1 | 24-01-1975 |
| | | | FR | 2259642 A1 | 29-08-1975 |
| | | | DE | 2426597 A1 | 02-01-1975 |
| | | | JP | 50027794 A | 22-03-1975 |
| | | | NL | 7407512 A | 03-12-1974 |
| EP 0548679 | A | 30-06-1993 | AU | 661742 B2 | 03-08-1995 |
| | | | AU | 3002092 A | 01-07-1993 |
| | | | CA | 2085315 A1 | 21-06-1993 |
| | | | EP | 0548679 A1 | 30-06-1993 |
| | | | JP | 5221602 A | 31-08-1993 |
| | | | NO | 924885 A | 21-06-1993 |
| | | | NZ | 245394 A | 28-03-1995 |
| US 3992468 | A | 16-11-1976 | FR | 2262654 A1 | 26-09-1975 |
| | | | FR | 2268772 A1 | 21-11-1975 |
| | | | FR | 2283878 A1 | 02-04-1976 |
| | | | BE | 825345 A1 | 11-08-1975 |
| | | | CA | 1067104 A1 | 27-11-1979 |
| | | | DE | 2508291 A1 | 04-09-1975 |
| | | | FR | 2298525 A2 | 20-08-1976 |
| | | | GB | 1505112 A | 22-03-1978 |
| | | | IT | 1033322 B | 10-07-1979 |
| | | | JP | 50121233 A | 23-09-1975 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                EP 04 01 0256

This annex lists the patent family members relating to the patent documents cited in  the above-mentioned European search report.
The members are as contained in the European Patent Office EDP file on
The European Patent Office is in no way liable for these particulars which are merely  given for the purpose of information.

01-11-2004

| Patent document cited in search report | | Publication date | Patent family member(s) | | Publication date |
|---|---|---|---|---|---|
| US 3992468 | A | | NL | 7502435 A | 03-09-1975 |
| | | | FR | 2298524 A2 | 20-08-1976 |
| | | | GB | 1505637 A | 30-03-1978 |
| US 5009872 | A | 23-04-1991 | CA | 1279861 C | 05-02-1991 |
| | | | AT | 65428 T | 15-08-1991 |
| | | | CN | 87103446 A | 09-12-1987 |
| | | | DE | 3771569 D1 | 29-08-1991 |
| | | | EP | 0246031 A2 | 19-11-1987 |
| | | | JP | 1993796 C | 22-11-1995 |
| | | | JP | 7029026 B | 05-04-1995 |
| | | | JP | 62289223 A | 16-12-1987 |

EPO FORM P0459

For more details about this annex : see Official Journal of the European Patent Office, No. 12/82